# EUROPÄISCHE PATENTSCHRIFT

(11) **EP 4 291 326 B1**
(45) Veröffentlichungstag und Bekanntmachung des Hinweises auf die Patenterteilung: **06.11.2024**
(21) Anmeldenummer: 22708427.4
(22) Anmeldetag: 07.02.2022
(51) Int. Cl.: B01J 19/24, B01J 8/06, F16L 53/37

(54) **REAKTOR ZUR DURCHFÜHRUNG EINER CHEMISCHEN REAKTION IN EINEM PROZESSFLUID UND VERFAHREN**
REACTOR FOR PERFORMING A CHEMICAL REACTION IN A PROCESS FLUID AND METHOD
RÉACTEUR DESTINÉ À LA RÉALISATION D'UNE RÉACTION CHIMIQUE DANS UN FLUIDE DE PROCESSUS ET PROCÉDÉ

(30) Priorität: 11.02.2021 EP 21156666
(43) Veröffentlichungstag der Anmeldung: 20.12.2023
(73) Patentinhaber: Linde GmbH, 82049 Pullach (DE); BASF SE, 67056 Ludwigshafen am Rhein (DE)
(72) Erfinder: ZELLHUBER, Mathieu, 82152 Martinsried (DE); HOFSTÄTTER, Martin, 81369 München (DE); POSSELT, Heinz, 83043 Bad Aibling (DE); DELHOMME-NEUDECKER, Clara, 81825 München (DE); MIHAILOWITSCH, Dieter, 82538 Geretsried (DE)
(86) Internationale Anmeldenummer: PCT/EP2022/052913
(87) Internationale Veröffentlichungsnummer: WO 2022/171582

(56) Entgegenhaltungen:
- EP-A1- 3 075 704
- WO-A1-2015/197181
- US-A1- 2012 328 269
- US-B2- 9 347 596

## Beschreibung

Die Erfindung betrifft einen Reaktor zur Durchführung einer chemischen Reaktion in einem Prozessfluid unter Verwendung mehrphasigen Wechselstroms zur Erhitzung des Prozessfluids.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Gegenwärtig steigt die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht oder nur eingeschränkt bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Die EP 3075704 A1 offenbart einen Ofen zur Dampfreformierung mit durch eine Brennkammer geführten Reaktionsrohren, wobei zusätzlich zu mindestens einem Brenner eine elektrische Widerstandheizung der Reaktionsrohre mittels Wechselstrom vorgesehen ist, wobei ein außerhalb der Brennkammer gelegener Sammler als Sternpunkt dient. Die US 9347596 B2 betrifft eine Vorrichtung zum elektrischen Beheizen eines Pipelinesystems.

Die WO 2015/197181 A1 offenbart einen Reaktor, in dem ein durch eine Rohrleitung fließendes Fluid erhitzt wird, wobei die elektrisch leitfähige Rohrleitung mit mehreren Phasen einer Wechselstromquelle verbunden ist, so dass eine Sternpunktschaltung gebildet wird und entsprechend dem elektrischen Widerstand der Rohrleitung Wärme erzeugt wird. Die dort gezeigte Anordnung ist vor allem für sogenannte mehrpässige Rohrgeometrien, d.h. die Rohrleitungen verlaufen entlang in einer Schlangenlinie hin und her, geeignet.

Für einpässige Rohrgeometrien jedoch, bei denen die zu beheizenden Rohrleitungen geradlinig durch den Reaktor verlaufen, können Randbedingungen insbesondere elektrischer und thermischer Natur mit dieser bekannten oder ähnlichen Anordnungen nicht erfüllt werden. Die Aufgabe besteht daher darin, einen elektrisch beheizbaren Reaktor bereitzustellen, durch den elektrische, thermische und mechanische Randbedingungen erfüllt werden können.

Diese Aufgabe wird gelöst durch einen Reaktor zur Durchführung einer chemischen Reaktion und ein Verfahren mit den Merkmalen der unabhängigen Ansprüche.

Erfindungsgemäß ist vorgesehen, die Stromeinspeisung in die zu beheizenden Reaktionsrohre zwischen den elektrisch leitenden Brücken vorzunehmen, es sind also beidseitig der Stromeinspeisung Brücken angeordnet, die die Reaktionsrohre elektrisch leitend verbinden. Über die elektrisch leitenden Brücken findet ein Potentialausgleich zwischen den Phasen statt, so dass elektrische Stromflüsse von den Reaktionsrohren über weiterführende Prozessleitungen in andere Teile einer Prozessanlage, in der der Reaktor installiert ist und die dort zu Schäden oder Gefährdungen führen können, verhindert bzw. stark unterdrückt werden. Durch die beidseitige Anordnung der Brücken erfolgt dies sowohl eintritts- als auch austrittsseitig. Dies ist bei einpässigen Rohrgeometrien vorteilhaft gegenüber einer Anordnung mit nur einer Brücke, da bei einer solchen ansonsten an einer Seite eine aufwändige elektrische Isolierung der Reaktionsrohre von weiterführenden Prozessleitungen vorgesehen werden müsste.

Gleichzeitig sind durch die erfindungsgemäße Anordnung die Stromeinspeiseanordnungen von den Rohreintritts- und Rohraustrittsöffnungen räumlich beabstandet, so dass an den Stromeinspeiseanordnungen, die anwendungsbedingt hohe Ströme leiten müssen, Kühlelemente angebracht werden können, ohne dass Platzkonflikte mit weiterführenden Prozessleitungen entstehen, insbesondere können heiße Reaktionsrohre bzw. damit verbundene weiterführende Prozessleitungen die Kühlleistung solcher Kühlelemente nicht negativ beeinflussen. Auch bestehen den mechanischen Aufbau betreffend keine Platzkonflikte zwischen den Stromeinspeiseanordnungen, die aufgrund der hohen auftretenden Ströme massiv ausgeführte stromführende Elemente umfassen, und weiterführenden Prozessleitungen.

Im Einzelnen wird ein Reaktor zur Durchführung einer chemischen Reaktion in einem Prozessfluid unter Verwendung mehrphasigen Wechselstroms bereitgestellt. Der Reaktor umfasst einen von thermisch isolierenden Reaktorwänden umgebenen Reaktorraum und mehrere im Wesentlichen geradlinige Reaktionsrohre. Der Wechselstrom dient zur elektrischen Erhitzung der Reaktionsrohre und damit des durch die Reaktionsrohre fließenden Prozessfluids, so dass diesem Energie für die chemische Reaktion bereitgestellt wird. Dass die Reaktionsrohre und damit das Prozessfluid unter Verwendung Wechselstroms erhitzt werden, soll nicht ausschließen, dass eine zusätzliche Erhitzung, etwa durch Verfeuerung chemischer Energieträger, vorgesehen sein kann. Bei der chemischen Reaktion handelt es sich um eine chemische Reaktion, die zumindest teilweise bei mindestens 500 °C abläuft.

Die Reaktionsrohre verlaufen zwischen wenigstens einer Rohreintrittsöffnung und wenigstens einer Rohraustrittsöffnung in einander gegenüberliegenden Reaktorwänden durch den Reaktorraum und bestehen aus einem Material, das ein elektrisches Widerstands-Erhitzen ermöglicht. Dass die Reaktionsrohre bzw. deren Material elektrisch beheizbar sind heißt, dass als Material für die Reaktionsrohre und insbesondere der Abschnitte zwischen den Brücken ein Material mit einer elektrischen Leitfähigkeit verwendet, das bzw. die für ein elektrisches Heizen geeignet ist. Beispiele sind hitzebeständige Stahllegierungen, insbesondere hitzebeständige Chrom-Nickel-Stahllegierungen. Solche Stahllegierungen können ebenfalls für die Brücken und die Stromeinspeiseanordnungen, insbesondere deren stromführende Elemente, verwendet werden. Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden. Insbesondere ist der Werkstoff Nr. 1.4852 bzw. Nr. 1.4852 Micro (GX40NiCrSiNb35-26) geeignet.

Im Reaktorraum sind zwei entlang der Reaktionsrohre voneinander beabstandete elektrisch leitende Brücken vorgesehen, die die Reaktionsrohre jeweils elektrisch leitend miteinander verbinden. Es sind elektrisch leitende Stromeinspeiseanordnungen vorgesehen, die sich durch eine oder mehrere Einspeiseöffnungen (bzw. Stromeinspeiseöffnungen), in einer der Reaktorwände erstrecken, wobei jede Stromeinspeiseanordnung zwischen den Brücken mit einem der Reaktionsrohre elektrisch leitend verbunden ist und mit einer der Phasen des Wechselstroms verbunden oder verbindbar ist. Die elektrisch leitenden Verbindungen (Stromeinspeisestelle bzw. Kontaktstelle) der Stromeinspeiseanordnungen mit den Reaktionsrohren liegen also wie auch die Brücken innerhalb des Reaktorraums. Jedes Reaktionsrohr ist auf elektrisch leitende Weise mit einer der Stromeinspeiseanordnungen verbunden.

Der Ausdruck "im Wesentlichen geradlinig" bezieht sich einerseits darauf, dass im Reaktorraum, zwischen einer Brücke und der nächstgelegenen Reaktorwand, in der sich eine Rohreintritts- bzw. Rohraustrittsöffnung befindet, Eintritts- bzw. Austritts-Sammelleitungen (sog. Header) vorgesehen sein können, die mehrere Reaktionsrohre zu einem einzelnen Sammelrohr verbinden. Andererseits können zwischen den Brücken geringfügige Abweichungen von einer Geraden auftreten, d.h. jedes Reaktionsrohr sollte zwischen den Brücken innerhalb eines Kreiszylinders mit dem 10-fachen Durchmesser des Reaktionsrohrs verlaufen.

Die Reaktorwände umschließen bzw. umgeben den Reaktorraum, d.h. einen Bereich, der in alle Raumrichtungen von mindestens einer Reaktorwand begrenzt wird. Der Reaktorraum ist typischerweise inertisiert. Im Allgemeinen werden dazu mehrere einzelne Wände verwendet, die so zusammengefügt sind, dass sie den Reaktorraum umschließen; es könnte also auch von einer Gruppe von Reaktorwänden gesprochen werden. Der umschlossene Bereich, und damit auch die Gruppe der Reaktorwände, kann eine beliebige volumetrische Form aufweisen, bevorzugt jedoch die eines viereckigen Prismas oder auch eines Zylinders. Die Reaktorwände können abgedichtete konstruktive Elemente aufweisen (wie Durchführungen oder Sichtfenster), jedoch auch dauerhaft geöffnete und/oder verschließbare Öffnungen als Verbindung zu anderen Anlagenteilen, bevorzugt zur Konditionierung der Atmosphäre innerhalb der Reaktorwand, z.B. Einlassstutzen für Inertgas oder Auslassöffnung zu einem Kamintrakt.

Bevorzugt ist ein elektrischer Widerstand jeder der Brücken zwischen zwei Reaktionsrohren (d.h. der elektrische Widerstand zwischen zwei Reaktionsrohren gemessen über die jeweilige Brücke) kleiner als ein elektrischer Vergleichswiderstand; wobei der Vergleichswiderstand gleich dem elektrischen Widerstand (in Längsrichtung der Reaktionsrohre) eines der Reaktionsrohre über eine Vergleichslänge ist; wobei Vergleichslänge ausgewählt ist aus: einem Abstand der beiden Reaktionsrohre; einer Länge einer Reaktionsrohranschlussverbindung zwischen einem Eintritts- bzw. Austrittsheader und einem Brückenanschluss am Eintritt bzw. Austritt des Rohrs (d.h. die Länge der Reaktionsrohranschlussverbindung entspricht dem Abstand zwischen Brücke und Eintritts- bzw. Austrittsheader). Denkbar ist auch, eine Abmessung der Brücke in Längsrichtung (der Reaktionsrohre) als Vergleichslänge zu wählen. Auch Kombinationen dieser Auswahlmöglichkeiten für die Vergleichslänge sind möglich, z.B. durch Mittelung oder Summierung. Weiter bevorzugt beträgt ein Verhältnis des elektrischen Widerstands der Brücke (zwischen den zwei Reaktionsrohren) zum Vergleichswiderstand maximal 1/10, noch weiter bevorzugt maximal 1/50, am meisten bevorzugt maximal 1/100. Insbesondere führt dies dazu, dass der elektrische Widerstand der Brücken kleiner ist als der elektrische Widerstand von weiterführenden Prozessleitungen bzw. von Eintritts- und Austrittsheadern, die typischerweise aufgrund der dort noch herrschenden relativ hohen Temperaturen aus dem gleichen oder einem ähnlichen Material (insbesondere einem Stahl) bestehen wie die Reaktionsrohre und entsprechend vergleichbare elektrische Leitfähigkeiten aufweisen. Effekt hiervon ist, dass der Potentialausgleich und dabei auftretende Ströme zwischen den Phasen größtenteils über die Brücken erfolgt bzw. fließen und nur geringe oder keine Ströme in weiterführende Prozessleitungen außerhalb des Reaktors fließen. Der Vergleichswiderstand entspricht dem elektrischen Widerstand eines Abschnitts (Vergleichsabschnitt) eines Reaktionsrohrs mit einer Länge, die gleich der Vergleichslänge ist. Da die mehreren Reaktionsrohre typischerweise die gleichen Abmessungen (Innen-, Außendurchmesser) aufweisen und aus dem gleichen Material bestehen, ist der Vergleichswiderstand unabhängig davon, welches Reaktionsrohr zur Bestimmung des Vergleichswiderstands herangezogen wird. Der Vergleichswiderstand kann einfach berechnet werden und/oder auch gemessen werden.

Vorzugsweise bestehen die Brücken aus dem gleichen Material wie die Reaktionsrohre. So können die Reaktionsrohre über die Brücken in hitzebeständiger Weise miteinander verbunden werden, insbesondere durch Schweißen. Alternativ bestehen die Brücken aus einem Material mit höherer elektrischer Leitfähigkeit als die Reaktionsrohre. Ebenso bevorzugt ist eine Querschnittsfläche der Brücken, die zwischen zwei Reaktionsrohren liegt, parallel zu den Reaktionsrohren verläuft und senkrecht zu der durch die beiden Reaktionsrohre gebildeten Ebene steht, größer als eine senkrecht zur Rohrlängsachse stehenden Querschnittsfläche einer Wand der Reaktionsrohre. Diese Ausführungen ermöglichen einen relativ zu den Reaktionsrohren geringen elektrischen Widerstand der Brücken.

Bevorzugt sind die Reaktionsrohre in wenigstens einer der Brücken eingegossen und/oder ist für wenigstens eine der Brücken für jedes Reaktionsrohr jeweils ein Reaktionsrohrabschnitt einstückig (einteilig) mit der Brücke oder einem Element der Brücke ausgebildet, wobei weiter bevorzugt weitere Reaktionsrohrabschnitte durch Schweißen mit der Brücke verbunden sind.

Weiterhin umfasst bevorzugt wenigstens eine Brücke erste Brückenelemente, von denen jedes elektrisch leitend mit einem der Reaktionsrohre verbunden ist, und ein zweites Brückenelement, das die ersten Brückenelemente elektrisch leitend verbindet, wobei das zweite Brückenelemente aus einem Material besteht, das eine höhere elektrische Leitfähigkeit aufweist als ein Material, aus dem die ersten Brückenelemente bestehen; wobei bevorzugt die ersten Brückenelemente aus dem gleichen Material wie die Reaktionsrohre bestehen.

Diese Ausführung ermöglicht es, bei gleichen geometrischen Abmessungen, den elektrischen Widerstand der Brücken zu verringern, so dass der Potentialausgleich zwischen den Reaktionsrohren verbessert wird. Das Material der ersten Brückenelemente kann so gewählt werden, dass diese in einfacher und hitzebeständiger Weise, etwa durch Schweißen, mit den Reaktionsrohren verbunden werden können, vorzugsweise wird also das Material der Reaktionsrohre ebenso für die ersten Brückenelemente verwendet.

Das zweite Brückenelement weist vorzugsweise Durchgänge auf, durch die die Reaktionsrohre verlaufen und in die die ersten Brückenelemente in Form einer Passung, insbesondere einer Presspassung, eingefügt sind; wobei weiter bevorzugt das Material des zweiten Brückenelements einen geringeren Wärmeausdehnungskoeffizienten aufweist als das Material der ersten Brückenelemente. Insbesondere kann das Material des zweiten Brückenelements Molybdän, Wolfram, Tantal, Niob und/oder Chrom umfassen oder zum größten Teil aus einem dieser Materialien oder einer Kombination davon bestehen. Noch weiter bevorzugt besteht das zweite Brückenelement zum größten Teil oder vollständig aus Molybdän und/oder die ersten Brückenelemente bestehen aus dem Material der Reaktionsrohre bestehen.

In dieser Ausgestaltung bestehen das zweite bzw. die zweiten Brückenelemente zumindest zum Teil aus einem Material, das reich an Molybdän, Wolfram, Tantal, Niob und/oder Chrom oder hieraus gebildet ist. Das Material weist insbesondere eine höhere spezifische elektrische Leitfähigkeit als das Material auf, aus dem die ersten Brückenelemente gebildet sind.

Dadurch, dass die ersten Brückenelemente mit dem zweiten Brückenelement mittels einer Presspassung verbunden werden, wird eine im Prinzip lösbare Verbindung geschaffen, die z.B. den Austausch von Reaktionsrohren erleichtert. Die unterschiedlichen Wärmeausdehnungskoeffizienten führen dazu, dass die Presspassung mit zunehmender Temperatur mit höherem Druck erfolgt, so dass der Kontakt, insbesondere der elektrische Kontakt, zwischen den ersten und dem zweiten Brückenelement verbessert wird. Molybdän weist zum Beispiel eine höhere Leitfähigkeit auf als Stähle, die vorzugsweise für die ersten Brückenelemente und die Reaktionsrohre verwendet werden, und kann gleichzeitig bei den im Reaktorbehälter herrschenden hohen Temperaturen eingesetzt werden.

Bevorzugt sind die Brücken als starre Bauteile oder Baugruppen ausgeführt, wobei weiter bevorzugt wenigstens eine, noch weiter bevorzugt jede, der Brücken einteilig, insbesondere als Gussteil, ausgeführt ist. Die starre Ausführung führt zu einer zusätzlichen relativen Fixierung der Reaktionsrohre.

Die eine oder die mehreren Einspeiseöffnungen (für elektrische Anschlüsse) befinden sich bevorzugt in einer Reaktorwand, die zwischen den Reaktorwänden, in denen sich die wenigstens eine Rohreintrittsöffnung bzw. die wenigstens eine Rohraustrittsöffnung befindet, verläuft; wobei weiter bevorzugt die eine oder die mehreren Einspeiseöffnungen eine längliche Form parallel zur Längsrichtung der Reaktionsrohre aufweisen. Die Stromeinspeiseanordnung kann sich so bei Wärmeausdehnung der Reaktionsrohre mitbewegen. Die Reaktorwand, in der sich die eine oder die mehreren Einspeiseöffnungen befinden, ist also eine seitliche Reaktorwand, d.h. eine Reaktorwand, die sich in Richtung der Reaktionsrohre erstreckt (z.B. parallel zu diesen oder in einem Winkel, etwa < 20°, zu diesen).

Vorzugsweise, aber nicht beansprucht, sind außerhalb des Reaktorraums Kühlpaneele vorgesehen, die benachbart zu stromführenden Elementen der Stromeinspeiseanordnungen angeordnet sind; wobei sich die Kühlpaneele bevorzugt parallel zur Längsrichtung der Reaktionsrohre erstrecken. Die Kühlpaneele sind weiter bevorzugt in einer (inertisierten) Anschlusskammer untergebracht, die an einer Außenseite der Reaktorwand, in der die Einspeiseöffnungen angeordnet sind, angeordnet ist. Bevorzugt sind die eine oder die mehreren Einspeiseöffnungen von der wenigstens einen Rohreintrittsöffnung und von der wenigstens einen Rohraustrittsöffnung räumlich getrennt.

Der Reaktor umfasst gemäß einer bevorzugten Ausführung eine Wechselstromquelle bzw. Wechselspannungsversorgung, die den Wechselstrom bzw. eine Wechselspannung bereitstellt. Insbesondere kann für wenigstens eine, bevorzugt für alle, Brücken ein Neutralleiter vorgesehen sein, der die Brücke mit einem Sternpunkt der Wechselstromquelle verbindet; wobei weiter bevorzugt ein elektrischer Widerstand der Brücken zwischen zwei Reaktionsrohren kleiner ist als der elektrische Widerstand des mit der jeweiligen Brücke verbundenen Neutralleiters; wobei weiter bevorzugt ein Verhältnis dieser Widerstände maximal 1/5, mehr bevorzugt maximal 1/20, am meisten bevorzugt maximal 1/50, beträgt.

Vorzugsweise ist der elektrische Widerstand des Neutralleiters (zwischen Brücke und Sternpunkt der Wechselstromquelle) kleiner als der elektrische Vergleichswiderstand. Hier ist der oben im Zusammenhang mit dem elektrischen Widerstand der Brücken eingeführte Vergleichswiderstand gemeint, wobei, falls unterschiedliche Vergleichswiderstände basierend auf verschiedenen Vergleichslängen definiert sind, einer ausgewählt werden kann oder ein Mittelwert der Vergleichswiderstände verwendet werden kann.

Bevorzugt, aber nicht beansprucht, beträgt eine Phasenverschiebung zwischen jeweils zwei voneinander verschiedenen Phasen des Wechselstroms als Bogenmaß ausgedrückt 2π·k/M, wobei k jeweils eine ganze Zahl im Bereich von 1 bis M-1 ist.

Vorzugsweise werden alle Durchführungen durch die Reaktorwände, d.h. insbesondere die Rohreintrittsöffnungen, die Rohraustrittöffnungen und die (Strom-)Einspeiseöffnungen, mittels geeigneter Vorrichtungen, etwa einem Dichtbalg, gasdicht ausgeführt. Eine solche Vorrichtung zur Gasabdichtung ist elektrisch isolierend ausgeführt, so dass es zu keinem elektrischen Kontakt zwischen dem durchgeführten Bauteil und der jeweiligen Reaktorwand kommt. Sind in einer Anschlusskammer angeordnete Kühlpaneele vorgesehen, kann auf eine gasdichte Ausführung der Einspeiseöffnungen verzichtet werden. Die Anschlusskammer sollte dann gasdicht gegenüber der Umgebung sein. Diese Ausführung ist etwa dann hilfreich, wenn die Abdichtung von länglichen (um eine Längsbewegung aufgrund der Wärmeausdehnungen der Reaktionsrohre aufzunehmen) Einspeiseöffnungen schwer durchführbar ist. Die Rohreintritts- und die Rohraustrittöffnungen sollten bei dieser Ausführung gasdicht ausgeführt werden.

Bevorzugt liegt ein Verhältnis der beiden Abstände einer Stromeinspeiseanordnung zu den beiden Brücken im Bereich von 0,25 bis 1. Weiter bevorzugt, aber nicht beansprucht, liegt das Verhältnis der beiden Abstände im Bereich von 0,25 bis 0,8, bevorzugt im Bereich von 0,25 bis 0,7. Die Kontaktstelle, d.h. die Stelle an der die Stromeinspeiseanordnung mit dem Reaktionsrohr verbunden ist, kann also asymmetrisch bezüglich der Brücken angeordnet werden. Anders formuliert teilt die Kontaktstelle in solch einer Ausführung den Abschnitt des Reaktionsrohrs, der zwischen den beiden Brücken gelegen ist, in zwei Rohrabschnitte unterschiedlicher Länge. Dadurch wird ein unterschiedlicher Wärmeeintrag in den beiden Rohrabschnitten und damit eine verbesserte Prozesssteuerung ermöglicht.

Bei der chemischen Reaktion kann es sich um eine chemische Reaktion handeln die zumindest teilweise bei einer Temperatur im Bereich von 200 °C bis 1700 °C, insbesondere von 300 °C bis 1400 °C bzw. von 400 °C bis 1100 °C, abläuft. Bevorzugt handelt es sich bei der chemischen Reaktion um eine chemische Reaktion, die zumindest teilweise bei einer Temperatur von mindestens 500 °C, weiter bevorzugt von mindestens 700 °C, abläuft, insbesondere zumindest teilweise in einem Temperaturbereich von 500 °C bzw. 700°C bis 1100 °C. Die bereitgestellten elektrischen Spannungen/Ströme sind geeignet entsprechende Heizleistungen zu erbringen. Ebenso sind der Reaktor und die Stromquelle eingerichtet, chemische Reaktionen bei diesen Temperaturen durchzuführen und entsprechende Heizleistungen zu erbringen. Vorzugsweise ist die chemische Reaktion eine der folgenden: Steam-Cracking (Dampfspalten), Steam-Reforming (Dampfreformierung), Dry-Reforming (Trockenreformierung, Kohlendioxidreformierung), Propandehydrierung, allgemein Reaktionen mit Kohlenwasserstoffen, die zumindest teilweise bei mehr als 500°C durchgeführt werden.

Erfindungsgemäß wird ein Verfahren zur Durchführung einer zumindest teilweise bei einer Temperatur von mindestens 500 °C ablaufenden chemischen Reaktion in einem Prozessfluid vorgeschlagen, wobei ein Reaktor nach einem der vorstehenden Ansprüche verwendet wird, wobei das Prozessfluid durch die Reaktionsrohre des Reaktors geleitet wird und unter Verwendung mehrphasigen Wechselstroms mittels elektrisches Widerstands-Erhitzens erhitzt wird; wobei die chemische Reaktion bevorzugt eine der folgenden Reaktionen ist: Dampfspalten, Dampfreformierung, Trockenreformierung, Propandehydrierung, eine Reaktion mit Kohlenwasserstoffen, die zumindest teilweise bei mehr als 500°C durchgeführt wird.

Die vorliegende Erfindung wird nachfolgend zunächst unter Bezugnahme auf Reaktionsrohre und Reaktoren beschrieben, wie sie zum Steamcracken oder zur Dampfreformierung zum Einsatz kommen. Die Erfindung kann aber auch in anderen Reaktortypen zum Einsatz kommen. Generell kann, wie erwähnt, der erfindungsgemäß vorgeschlagene Reaktor zur Durchführung aller endothermen chemischen Reaktionen verwendet werden.

Die Erfindung wird nachfolgend unter Bezugnahme auf die beigefügten Figuren weiter erläutert, die Ausgestaltungen der vorliegenden Erfindung veranschaulichen.

### Kurze Beschreibung der Figuren

Figur 1 zeigt in einen mit einer Wechselstromquelle verbundenen Reaktor gemäß einer bevorzugten Ausführungsform der Erfindung;
Figur 2A und 2B zeigen Querschnitte einstückiger Brücken und deren Verbindung mit Reaktionsrohren gemäß bevorzugten Ausführungsformen der Erfindung;
Figur 3 zeigt einen Querschnitt einer mehrteiligen Brücke gemäß einer weiteren bevorzugten Ausführungsform der Erfindung;
Figur 4 zeigt schematisch eine Stromeinspeiseanordnung gemäß einer Ausgestaltung der Erfindung; und
Figuren 5A und 5B zeigen schematisch Reaktoren, bei denen entsprechend einer bevorzugten Ausgestaltung Kühlpaneele zur Kühlung der Stromeinspeiseanordnungen vorgesehen sind.

### Ausführliche Figurenbeschreibung

In den Figuren sind einander baulich oder funktionell entsprechende Elemente mit identischen oder ähnlichen Bezugszeichen veranschaulicht und werden der Übersichtlichkeit halber nicht wiederholt erläutert. Von mehrfach auftretenden Elementen ist zum Teil nur eines stellvertretend mit einem Bezugszeichen versehen.

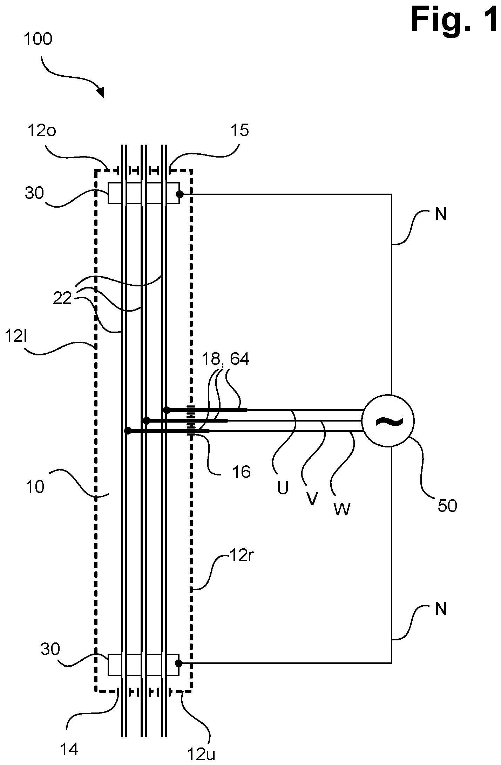

Figur 1 stellt einen erfindungsgemäßen Reaktor 100 gemäß einer bevorzugten Ausführungsform dar. Der Reaktor umfasst Reaktorwände 12o, 12u, 12r, 121, die einen Reaktorraum 10 umgeben, die Reaktorwände bilden also eine Reaktorbehälter (bzw. eine Reaktorbox), dessen Inneres den Reaktorraum darstellt. Weiterhin umfasst der Reaktor mehrere Reaktionsrohre 22, die geradlinig durch den Reaktorraum 10 verlaufen, wobei sie zwischen Rohreintrittsöffnungen 14 und Rohraustrittsöffnungen 15, die in der unteren Reaktorwand 12u bzw. der oberen Reaktorwand 12o gebildet sind, verlaufen. Es können weiterhin als Eintrittsheader bzw. Austrittsheader bezeichnete Sammelleitungen vorgesehen sein (nicht dargestellt), die die Reaktionsrohre eintrittsseitig bzw. austrittsseitig fluidisch miteinander verbinden. Diese Eintrittsheader bzw. Austrittheader können außerhalb des Reaktorraums, d.h. auf der von dem Reaktorraum abgewandten Seite der Reaktorwände, oder im Reaktorraum angeordnet sein. Im letzteren Fall sind sie jeweils zwischen einer der Brücken und der entlang der Reaktionsrohre nächstgelegenen Reaktorwand angeordnet.

Jedes der Reaktionsrohre 22 ist auf elektrisch leitende Weise mit einer Stromeinspeiseanordnung 18, die sich durch eine Einspeiseöffnung 16 in einer seitlichen Reaktorwand 12r erstreckt, verbunden. Dazu können entsprechende Kontaktpassagen an den Reaktionsrohren vorgesehen sein, die mit stabförmigen Elementen 64, die in den Stromeinspeiseanordnungen umfasst sind und die als stromführende (elektrisch leitende) Elemente dienen, elektrisch leitend verbunden sind. Die stabförmigen Elemente 64 erstrecken sich durch die Reaktorwand. Die Stromeinspeiseanordnungen sind wiederum mit den Phasen bzw. Phasenanschlüssen U, V, W, einer mehrphasigen Wechselstromquelle 50 verbunden, so dass in jedes Reaktionsrohr eine der Phasen eingespeist wird. Bevorzugt weist die Wechselstromquelle wie dargestellt 3 Phasen auf und beträgt die Anzahl der Reaktionsrohre 3 oder ein Vielfaches, z.B. N·3, wobei N eine ganze Zahl größer gleich 2 ist, davon, wobei jede der Phasen über eine jeweilige Stromeinspeiseanordnung mit einem der Reaktionsrohre verbunden ist, oder wobei, falls die Anzahl der Reaktionsrohre ein Vielfaches N von 3 ist, jede Phase über jeweilige Stromeinspeiseanordnungen mit N Reaktionsrohren verbunden ist. Selbstverständlich ist auch eine andere Anzahl ungleich 1 an Phasen und Reaktionsrohren (bzw. Vielfachen davon) als 3 denkbar. Die Kontaktstelle der Verbindung der Stromeinspeiseanordnungen mit den Reaktionsrohren kann für wenigstens eine Stromeinspeiseanordnung (für verschiedene Stromeinspeiseanordnungen unabhängig voneinander) asymmetrisch bezüglich den Brücken liegen, d.h. den zwischen den Brücken gelegenen Rohrabschnitt des jeweiligen Reaktionsrohrs asymmetrisch aufteilen (nicht dargestellt).

Im Allgemeinen ist die Anzahl von Phasen also M, wobei M eine ganze Zahl größer als 1 ist. Die Phasenverschiebungen zwischen den Phasen sind bevorzugt so gewählt, dass sich die Spannungen bzw. Ströme in einem Sternpunkt aufheben, d.h. die Phasenverschiebung zwischen zwei beliebigen Phasen kann als Bogenmaß (Einheit rad) ausgedrückt werden als 2π·k/M, bzw. in Grad als 360°·k/M, wobei k eine ganze Zahl im Bereich von 1 bis M-1 ist. Bei drei Phasen also 2π/3 bzw. 4π/3, entsprechend 120° bzw. 240°. Der Phasenunterschied zweier aufeinanderfolgender Phasen wird dann mit k=1 erhalten, d.h. als 2π/M. Diese Wahl ist vorteilhaft, da sich dann bei symmetrischer Belastung der Phasen die Wechselspannungen der verschiedenen Phasen an den Brücken gegenseitig aufheben.

Die Wechselstromquelle 50 ist vor allem zum Verständnis der Erfindung dargestellt, um zu veranschaulichen, wie der mehrphasige Wechselstrom bereitgestellt werden kann, sie bildet keinen notwendigen Bestandteil der Erfindung. Dieser kann z.B. durch eine Produktionsanlage, in der Reaktor installiert wird bzw. ist, bereitgestellt werden.

Eine geeignete Wechselstromquelle 50 kann wie folgt ausgeführt sein, z.B. als Wechselstromtransformator, insbesondere als Hochstromtransformator. Die Primärseite, d.h. die Wechselstromzufuhr zur Wechselstromquelle 50 erfolgt, z.B. aus einem öffentlichen Versorgungsnetz oder einem Generator. Eine primärseitige Wechselspannung kann typischerweise einige hundert bis einige tausend Volt betragen, z.B. 400 V, 690 V oder 1,2 kV. Zwischen der Primärseite der Stromquelle 50 und einem etwaigen öffentlichen Versorgungsnetz oder einem Generator ist möglicherweise wenigstens ein weiterer nicht dargestellter Transformator (evtl. wenigstens ein Regeltransformator, der es ermöglicht, die sekundärseitige Wechselspannung zu steuern bzw. in einem gewissen Spannungsbereich einzustellen) zwischengeschaltet, um eine geeignete Eingangsspannung für den Hochstromtransformator zu erhalten. Statt oder zusätzlich zu diesem zwischengeschalteten wenigstens einem Transformator kann eine Einstellung der Eingangsspannung oder der resultierenden Heizleistung auch mittels einem oder mehreren Thyristor-Leistungsstellern erfolgen. Sekundärseitig sind die Phasenleitungen bzw. Phasenanschlüsse U, V, W vorgesehen, an denen die Phasen des Wechselstroms bereitgestellt werden. Die sekundärseitige Wechselspannung kann zweckmäßigerweise im Bereich bis 300 V liegen, etwa kleiner 150 V oder kleiner 100 V sein, auch kleiner oder gleich 50 V ist möglich. Die Sekundärseite ist von der Primärseite galvanisch getrennt.

Im Reaktorraum 10 sind zwei elektrisch leitende Brücken 30 vorgesehen, die elektrisch leitend mit den Reaktionsrohren 22 verbunden sind, jede Brücke ist hier mit allen Reaktionsrohren verbunden. Die Verbindung mit den Reaktionsrohren erfolgt dabei an Stellen, die entlang der Reaktionsrohre, d.h. entlang deren Längsrichtung (also die Richtung, in die das Prozessfluid fließen kann), voneinander beabstandet sind. Schaltungstechnisch bilden die Brücken 30 Sternpunkte, sie könnten also als Sternbrücken bezeichnet werden. Wenn ein Vielfaches N der Phasenanzahl M an Reaktionsrohren vorhanden ist (also N·M) können für jedes dieser Vielfachen zwei voneinander beabstandete elektrisch leitende Brücken vorgesehen sein, die jeweils mit M Reaktionsrohren verbunden sind, oder es können nur zwei voneinander beabstandete Brücken vorgesehen sein, die dann jeweils mit allen Reaktionsrohren verbunden sind. Kombinationen sind ebenso denkbar.

Die Stromeinspeiseanordnungen 18 bzw. deren stromführende Elemente 64 sind zwischen den beiden Brücken 30 mit den Reaktionsrohren verbunden. Hier beispielweise in etwa in der Mitte zwischen den Brücken. Allgemeiner sollte ein Abstandsverhältnis, d.h. das Verhältnis der beiden Abstände einer Stromeinspeiseanordnung 18 zu den beiden Brücken 30 (genauer das Verhältnis des kleineren dieser Abstände zum größeren), im Bereich von 0,25 (ein Abstand viermal so groß wie der andere) bis 1 (Abstände gleich groß) liegen. Bevorzugt liegt dieses Verhältnis im Bereich von 0,5 bis 1, weiter bevorzugt im Bereich von 0,8 bis 1. Gemäß einer anderen bevorzugten Ausführung liegt dieses Verhältnis im Bereich von 0,25 bis 0,8, weiter bevorzugt im Bereich von 0,25 bis 0,7. Für verschiedene Reaktionsrohre kann dieses Verhältnis unterschiedlich sein, vorzugsweise ist es für alle Reaktionsrohre gleich. Unterschiedliche Abstände der Stromeinspeiseanordnungen zu den Brücken (Abstandsverhältnis ungleich eins) resultieren in unterschiedlich starken Strömen und damit in unterschiedlichen Heizleistungseinträgen in die beiden Rohrabschnitte zwischen der Stromeinspeiseanordnung und den beiden Brücken. Dies kann verwendet werden, um die chemische Reaktion zu beeinflussen.

Die Brücken 30 sind vorteilhafterweise so ausgestaltet, dass ihr elektrischer Widerstand im Vergleich zu den Reaktionsrohren klein ist. Das ist in dem Sinne zu verstehen, dass der über eine Brücke gemessene elektrische Widerstand zwischen zwei Reaktionsrohren kleiner ist als der elektrische Widerstand eines Abschnitts bzw. Vergleichsabschnitt der Reaktionsrohre mit einer bestimmten Länge, wobei der elektrische Widerstand entlang der Länge bestimmt (berechnet und/oder gemessen) wird. Der elektrische Widerstand des Vergleichsabschnitts bildet einen Vergleichswiderstand. Hierbei wird bevorzugt einer der folgenden Vergleichsabschnitte herangezogen: ein Vergleichsabschnitt, der eine Länge aufweist, die gleich dem Abstand der beiden Reaktionsrohre ist; ein Vergleichsabschnitt, der eine Länge aufweist, die gleich einer Abmessung der Brücke in Längsrichtung der Reaktionsrohre ist; ein Vergleichsabschnitt, der eine Länge aufweist, die gleich einer Länge einer Reaktionsrohranschlussverbindung zwischen einem Eintritts- bzw. Austrittsheader und einem Brückenanschluss am Eintritt bzw. Austritt des Rohrs ist; oder ein Vergleichsabschnitt, der eine Länge aufweist, die gleich einem Abstand der Brücke zu einer Reaktorwand ist, in der sich die Rohreintritts- bzw. Rohraustrittsöffnungen befinden, wobei die Brücke zwischen dieser Reaktorwand und den Verbindungsstellen der Stromeinspeiseanordnungen mit den Reaktionsrohren gelegen ist. Bevorzugt beträgt ein Verhältnis zwischen dem über die Brücke gemessenen elektrischen Widerstand und dem elektrischen Widerstand des Vergleichsabschnitts maximal 1/10, weiter bevorzugt maximal 1/50, am meisten bevorzugt maximal 1/100.

Weiterhin sind optionale Neutralleiter N dargestellt, die die Brücken mit einem Sternpunkt der Stromquelle verbinden. Die Neutralleiter sind vorteilhafterweise so gestaltet, dass ihr elektrischer Widerstand (zwischen Brücke und Stromquelle) größer ist als der elektrische Widerstand der Brücken zwischen zwei Reaktionsrohren und kleiner ist als der elektrische Widerstand des vorstehenden Vergleichsabschnitts.

Die Brücken können im Prinzip Bauteile sein, die Durchgänge für die Reaktionsrohre aufweisen. Ein Kontakt zwischen durch diese Durchgänge verlaufenden Reaktionsrohren und den Brücken kann dann beispielsweise mittels einer Presspassung hergestellt werden. Auch ist es möglich, die Reaktionsrohre in die Brücken einzugießen.

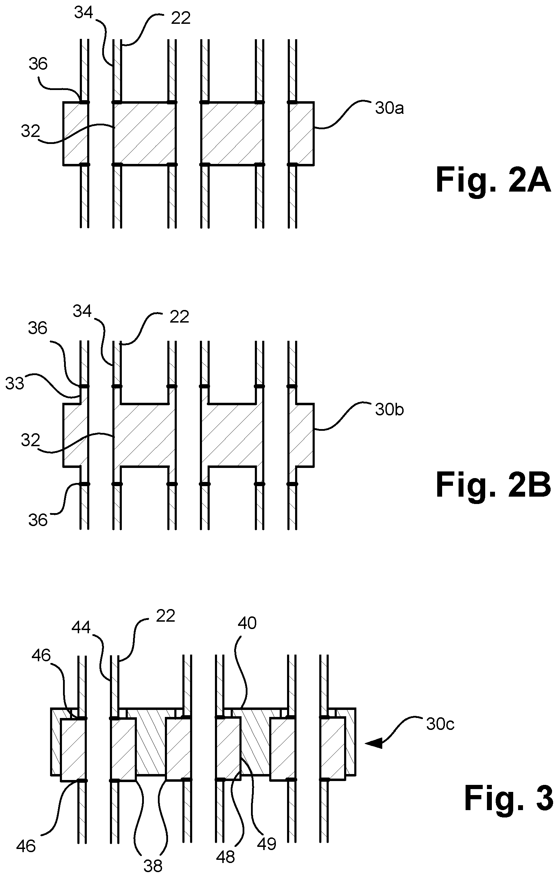

Abweichend davon ist bevorzugt vorgesehen, dass Durchgänge durch die Brücken selbst Abschnitte der Reaktionsrohre sind; mit anderen Worten, dass Abschnitte der Reaktionsrohre mit den Brücken einstückig ausgebildet sind. Die weiteren Reaktionsrohrabschnitte werden dann durch Schweißen mit diesen Abschnitten verbunden. In den Figuren 2A, 2B und 3 sind entsprechende Ausführungen dargestellt.

Figur 2A und 2B stellen, in einer Querschnittsansicht, einstückige Brücken 30a, 30b und deren Verbindung mit Reaktionsrohren 22 gemäß bevorzugten Ausführungsformen dar. In Figur 2A ist die Brücke 30a durch eine Platte gebildet, durch die sich Durchgänge 32 in Längsrichtung erstrecken. Die Seitenflächen der Brücke bzw. Platte, die einander in Längsrichtung gegenüber liegen, sind dabei plan, bilden also abgesehen von den Durchgängen Ebenen ohne Vorsprünge. Die Durchgänge 32 entsprechen bzw. gleichen in ihrer Geometrie und ihren Abmessungen der Geometrie und Abmessung der Innenseite 34 der Reaktionsrohre 22. Bei um die Längsachse rotationssymmetrischen Reaktionsrohren sind also die Durchgänge kreisförmig, wobei ihr Durchmesser gleich dem Innendurchmesser der Reaktionsrohre ist. Die Brücke ist mittels Schweißens, d.h. durch Schweißnähte 36, mit den außerhalb der Brücke gelegenen Reaktionsrohrabschnitten verbunden, so dass die die Durchgänge 32 bündig mit den Innenseiten 34 verlaufen. Die Durchgänge 32 bilden also Abschnitte der Reaktionsrohre.

Die Ausführungsform der Figur 2B gleicht im Wesentlichen der Ausführungsform der Figur 2A, mit dem Unterschied, dass hier an den Seitenflächen der Brücke 30b Vorsprünge 33 vorgesehen sind, die in ihrer Geometrie und ihren Abmessungen der Geometrie und Abmessung der Wand der Reaktionsrohre 22 (genauer der außerhalb der Brücke gelegenen Reaktionsrohrabschnitte) gleichen. Bei rotationssymmetrischen Reaktionsrohren sind also Innen- und Außendurchmesser der Vorsprünge gleich Innen- und Außendurchmesser der Reaktionsrohre. Diese Vorsprünge verlängern die Durchgänge sozusagen über die Seitenflächen hinaus. Die außerhalb der Brücke gelegenen Reaktionsrohrabschnitte sind mit Stirnseiten der Vorsprünge durch Schweißnähte 36 verbunden.

Figur 3 stellt, in einer Querschnittsansicht, eine bevorzugte, mehrteilige Brücke 30c dar. Dies umfasst entsprechend der Anzahl von Reaktionsrohren mehrere erste Brückenelemente 38 und ein zweites Brückenelement 40. Jedes der ersten Brückenelemente 38 weist einen Durchgang 42 in Längsrichtung auf, der in seiner Geometrie und seinen Abmessungen der Geometrie und Abmessung der Innenseite 44 eines der Reaktionsrohre 22 gleicht. Reaktionsrohrabschnitte außerhalb der Brücke 32c sind mittels Schweißens (Schweißnähte 46) mit dem jeweiligen ersten Brückenelement 38 so verbunden, dass der Durchgang mit diesen fluchtet. Die Außenseite 48 der ersten Brückenelemente verläuft parallel zur Längsrichtung. Eine radiale Dicke der ersten Brückenelemente, d.h. ein Abstand zwischen Durchgang und Außenseite der Brückenelemente, ist vorzugsweise in Umfangsrichtung konstant. Radiale Richtung und Umfangsrichtung sind in Bezug auf die durch die Reaktionsrohre definierte Längsrichtung zu verstehen. Abweichend hiervon kann die Außenseite auch eine andere Geometrie aufweisen.

Das zweite Brückenelement 40, das hier beispielhaft im Wesentlichen eine Platte ist, weist in Längsrichtung verlaufende, gestufte Durchgänge 49 auf, wobei ein Bereich (eine Stufe) der Durchgänge in seiner Geometrie und seinen Abmessungen an die Außenseite der ersten Brückenelemente so angepasst ist, dass die ersten Brückenelemente in diese Bereiche mittels einer Passung, insbesondere einer Presspassung, eingesetzt werden können. Ein weiterer Bereich (andere Stufe) der Durchgänge weist eine Geometrie und Abmessungen auf, die so eingerichtet sind, dass einerseits der mit dem jeweiligen ersten Brückenelemente verschweißte Reaktionsrohrabschnitt durch diesen Bereich hindurchpasst, und dass andererseits das jeweilige erste Brückenelement nicht hindurchpasst. Das zweite Brückenelement kann also in der gezeigten Anordnung auf den ersten Brückenelementen aufliegen und ist so, selbst wenn keine Presspassung vorliegt, gesichert.

Bevorzugt besteht das zweite Brückenelement aus einem vom Material der ersten Brückenelemente unterschiedlichen Material. Weiter bevorzugt weist das Material des zweiten Brückenelements (z.B. Molybdän oder eine Molybdän-Legierung) eine höhere elektrische Leitfähigkeit und einen geringeren Wärmeausdehnungskoeffizienten als das Material der ersten Brückenelemente (z.B. ein hochtemperaturbeständiger Cr-Ni-Stahl) auf.

Die ersten Brückenelemente könnten auch analog zu Figur 2B ausgeführt sein (nicht dargestellt), d.h. es könnten Vorsprünge vorgesehen sein, die die Durchgänge verlängern und die in ihrer Geometrie und ihren Abmessungen der Wand der Reaktionsrohre gleichen. Die Reaktionsrohrabschnitte außerhalb der Brücke werden dann wieder an den Stirnseiten der Vorsprünge verschweißt. Ebenso ist es möglich, dass die Reaktionsrohre in die ersten Brückenelemente eingegossen sind.

Anstelle von mehreren ersten Brückenelementen kann auch ein einzelnes erstes Brückenelement verwendet werden, das sich über die mehreren Reaktionsrohre spannt (und mit diesen verbunden ist) und mit einem einzelnen zweiten Brückenelement verbunden ist. Bezugnehmend auf Figur 3 könnten die ersten Brückenelemente etwa an ihrem unteren Ende zu einem einzelnen ersten Brückenelement verbunden sein, so dass dieses einzelne erste Brückenelement weiterhin wie gezeigt in das zweite Brückenelement eingepasst werden kann. Damit lässt sich sicherstellen, dass auch im kalten Zustand, bei möglicherweise verminderter Kontaktierung zwischen den beiden (erstem und zweitem) Brückenelementen ein Mindestpotentialausgleich über das erste Brückenelement erfolgen kann, der bei zunehmender Temperatur und verbesserter Kontaktierung mit dem zweiten Brückenelement weiter verbessert wird.

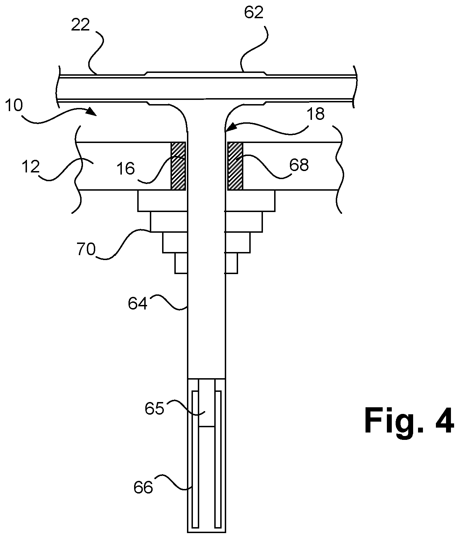

Figur 4 zeigt in einer Ausschnittsdarstellung schematisch eine beispielhafte Stromeinspeiseanordnung 18, die mit einem durch einen Reaktorraum 10 verlaufenden Reaktionsrohr 22 verbunden ist. Die Stromeinspeiseanordnung 18 umfasst ein elektrisch leitendes stabförmiges Element 64, das sich durch eine Einspeiseöffnung 16 in einer Reaktorwand 12 (beispielsweise die Reaktorwand 12r aus Figur 1) erstreckt.

Die Einspeiseöffnung 16 ist vorzugsweise mit einem elektrischen Isoliermaterial 68 ausgekleidet.

Die Stromeinspeiseanordnung 18 ist in einer Kontaktpassage 62 elektrisch leitend mit dem Reaktionsrohr 22 verbunden. Dieser ist vorzugsweise, wie gezeigt, als Verdickung des Reaktionsrohrs ausgeführt, wobei das stabförmige Element 64 einstückig mit der Verdickung ausgeführt ist, also einstückig mit dem Reaktionsrohr verbunden ist. Bei der Herstellung können beispielsweise die Kontaktpassage 62 und das stabförmige Element 64 als einstückiges Gussteil gefertigt werden und dann durch Schweißen mit dem Reaktionsrohr verbunden werden. Alternativ zur einstückigen Ausführung könnte die Stromeinspeiseanordnung auch mittels einer Manschette, die um das Reaktionsrohr herumläuft, mit diesem verbunden werden. Das stabförmige Element 64 geht in einen Stromeinspeisezapfen 65 über, an dem beispielsweise zwei Stromschienen oder Litzen 66 zum Anschluss einer der Phasen (etwa U, V, W in Figur 1) einer mehrphasigen Wechselstromquelle angebracht sind.

Weiterhin kann optional eine Balgenanordnung 70 bereitgestellt sein, die eine gasdichte Abdichtung des Reaktorraums 10 gegenüber der Umgebung und gleichzeitig eine Beweglichkeit (etwa für thermische Ausgleichsbewegungen) der stabförmigen Elemente 64 relativ zur Reaktorwand 12 sicherstellt.

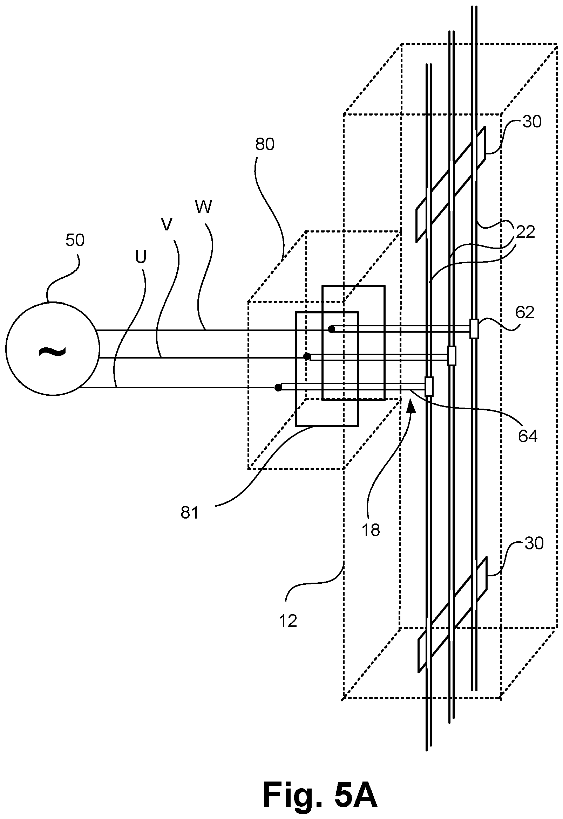

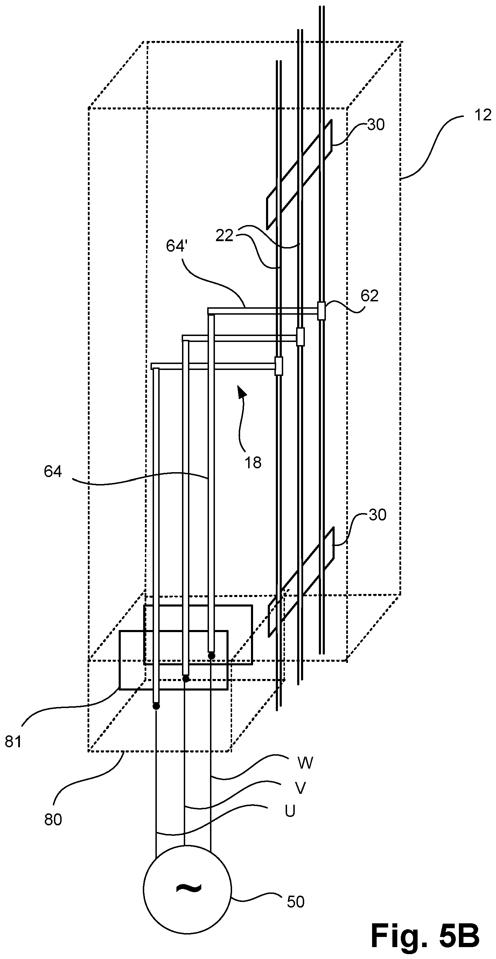

Figuren 5A und 5B stellen skizzenhaft bevorzugte Ausführungsformen dar, in denen zur Kühlung der Stromeinspeiseanordnungen 18 jeweils eine Kühlanordnung, die Kühlpaneele 81 umfasst, vorgesehen ist. Die Kühlanordnung ist beispielweise in einer außerhalb des Reaktorraums angeordneten Anschlusskammer 80 untergebracht. In beiden Fällen entspricht die Anordnung der Reaktionsrohre 22 in dem von der Reaktorwand 12 umgebenen Reaktorraum und deren Verbindung mit den Brücken 30 und den Stromeinspeiseanordnungen 18 der in Figur 1 gezeigten. Die Reaktionsrohre sind jeweils an Kontaktpassagen 62 elektrisch leitend mit den Stromeinspeiseanordnungen 18 (etwa mit in diesen umfassten stabförmigen Elementen, wie in Figur 4) verbunden und erstrecken sich durch eine der Reaktorwände, d.h. durch nicht weiter dargestellte Einspeiseöffnungen.

Die in der Anschlusskammer 80 untergebrachten Kühlpaneele 81 sind so angeordnet, dass sie sich benachbart stromführender Elemente der Einspeisevorrichtungen 18 (stabförmige Elemente 64) befinden und parallel dazu verlaufen. Insbesondere befinden sich die Paneele jeweils zwischen zwei stromführenden Elementen bzw. stabförmigen Elementen 64. Auf diese Weise kann Wärme, die von den Einspeisevorrichtungen aus dem Reaktor geleitet wird, und Wärme, die durch elektrische Ströme in den Einspeisevorrichtungen erzeugt wird, abgeführt werden. Vorzugsweise werden die Kühlpaneele von einem Kühlfluid durchströmt.

Die beiden Figuren unterscheiden sich darin, dass die Einspeiseöffnungen in verschiedenen Reaktorwänden angeordnet sind und sich die Einspeisevorrichtungen 18 bzw. die stabförmigen Elemente 64 entsprechend durch verschiedene Reaktorwände erstrecken. In Figur 5A ist dies die (in der Figur) linke Reaktorwand. Allgemeiner eine Reaktorwand, die sich parallel zu der durch die Reaktionsrohre definierten Längsrichtung erstreckt; es könnte also ebenso die rechte, die vordere oder die hintere Reaktorwand sein. Die Anschlusskammer 80 ist an der linken Reaktorwand außerhalb des Reaktorraums angeordnet. Die Kühlpaneele 81 sind parallel zur Längsrichtung angeordnet. Eine Längsbewegung der Einspeisevorrichtungen 18 in Längsrichtung relativ zu den Kühlpaneelen 81, die normalerweise nicht beweglich sind, ist also möglich. Eine solche Längsbewegung der typischerweise starr mit den Reaktionsrohren verbundenen Einspeisevorrichtungen kann sich durch die Wärmeausdehnung der Reaktionsrohre ergeben. Die Abstützung bzw. Aufhängung der Einspeisevorrichtungen ist entsprechend bevorzugt flexibel ausgeführt, so dass eine Längsbewegung möglich ist. Jede Einspeiseöffnung sollte bevorzugt eine längliche Form aufweisen, d.h. ihre Abmessung in Längsrichtung sollte größer als ihre Abmessung quer dazu sein, wobei beide Abmessungen parallel zur Reaktorwand zu verstehen sind. Die linke, rechte, die vordere und die hintere Reaktorwand können allgemein als seitliche Reaktorwand angesehen werden.

In Figur 5B sind die Einspeisevorrichtungen, genauer stabförmige Elemente 64, durch die untere Reaktorwand geführt, die obere Reaktorwand wäre ebenso möglich. Die stabförmigen Elemente 64 verlaufen also parallel zur Längsrichtung. Die Einspeisevorrichtungen 18 umfassen hier weitere elektrisch leitende stabförmige Elemente 64' die einerseits mit den stabförmigen Elementen 64, die durch die Reaktorwand verlaufen, und andererseits mit den Reaktionsrohren 22 verbunden sind. Diese weiteren stabförmige Elementen 64' verlaufen hier parallel zur unteren Reaktorwand könnten aber ebenso schräg verlaufen. Auch hier sind die Einspeisevorrichtungen 18 bevorzugt flexibel abgestützt bzw. aufgehängt.

Wie anhand der Ausführungsformen der Figuren 5A und 5B erkennbar ist, ermöglich es die vorliegende Erfindung, die Einspeiseöffnungen entfernt von den Eintritts- und Austrittsöffnungen anzubringen, so dass stromführende Elemente der Stromeinspeiseanordnungen nicht zusätzlich durch heiße weiterführende Prozessleitungen erwärmt werden und eine effektive Kühlung der Stromeinspeiseanordnungen ermöglicht wird.

## Patentansprüche

1. Reaktor (100) zur Durchführung einer zumindest teilweise bei einer Temperatur von mindestens 500 °C ablaufenden chemischen Reaktion in einem Prozessfluid unter Verwendung mehrphasigen Wechselstroms, umfassend einen von thermisch isolierenden Reaktorwänden (12o, 12u, 12r, 12l) umgebenen Reaktorraum (10) und mehrere im Wesentlichen geradlinige Reaktionsrohre (22);
wobei die Reaktionsrohre zwischen wenigstens einer Rohreintrittsöffnung (14) und wenigstens einer Rohraustrittsöffnung (15) in einander gegenüberliegenden Reaktorwänden durch den Reaktorraum verlaufen und aus einem Material bestehen, das ein elektrisches Widerstands-Erhitzen ermöglicht;
wobei im Reaktorraum zwei entlang der Reaktionsrohre voneinander beabstandete elektrisch leitende Brücken (30) vorgesehen sind, die die Reaktionsrohre jeweils elektrisch leitend miteinander verbinden;
wobei elektrisch leitende Stromeinspeiseanordnungen (18) vorgesehen sind, die sich durch eine oder mehrere Einspeiseöffnungen (16), in einer der Reaktorwände erstrecken, wobei jedes Reaktionsrohr auf elektrisch leitende Weise mit einer der Stromeinspeiseanordnungen (18) verbunden ist, wobei jede Stromeinspeiseanordnung zwischen den Brücken mit einem der Reaktionsrohre elektrisch leitend verbunden ist und mit einer der Phasen (U, V, W) des Wechselstroms verbunden oder verbindbar ist.

2. Reaktor nach Anspruch 1, wobei ein elektrischer Widerstand jeder der Brücken zwischen zwei Reaktionsrohren kleiner ist als ein elektrischer Vergleichswiderstand; wobei der Vergleichswiderstand gleich dem elektrischen Widerstand eines der Reaktionsrohre über eine Vergleichslänge ist; wobei die Vergleichslänge ausgewählt ist aus: einem Abstand der beiden Reaktionsrohre, und einer Länge einer Reaktionsrohranschlussverbindung zwischen einem Eintritts- bzw. Austrittsheader und einem Brückenanschluss am Eintritt bzw. Austritt des Rohrs; wobei jeweils ein Verhältnis des Widerstands der Brücke zum Vergleichswiderstand bevorzugt maximal 1/10, weiter bevorzugt maximal 1/50, am meisten bevorzugt maximal 1/100 beträgt.

3. Reaktor nach einem der vorstehenden Ansprüche, wobei die Brücken aus dem gleichen Material wie die Reaktionsrohre oder einem Material mit höherer elektrischer Leitfähigkeit als die Reaktionsrohre bestehen; und/oder wobei eine Querschnittsfläche der Brücken, die zwischen zwei Reaktionsrohren liegt, parallel zu den Reaktionsrohren verläuft und senkrecht zu der durch die beiden Reaktionsrohre gebildeten Ebene steht, größer ist als eine senkrecht zur Rohrlängsachse stehenden Querschnittsfläche einer Wand der Reaktionsrohre.

4. Reaktor nach einem der vorstehenden Ansprüche, wobei die Reaktionsrohre in wenigstens einer der Brücken eingegossen sind; und/oder wobei für wenigstens eine der Brücken für jedes Reaktionsrohr jeweils ein Reaktionsrohrabschnitt einstückig mit der Brücke oder einem Element der Brücke ausgebildet ist; wobei bevorzugt weitere Reaktionsrohrabschnitte durch Schweißen mit der Brücke verbunden sind.

5. Reaktor nach einem der vorstehenden Ansprüche, wobei wenigstens eine Brücke (30c) erste Brückenelemente (38), von denen jedes elektrisch leitend mit einem der Reaktionsrohre verbunden ist, und ein zweites Brückenelement (40) umfasst, das die ersten Brückenelemente elektrisch leitend verbindet, wobei das zweite Brückenelemente aus einem Material besteht, das eine höhere elektrische Leitfähigkeit aufweist als ein Material, aus dem die ersten Brückenelemente bestehen; wobei bevorzugt die ersten Brückenelemente aus dem gleichen Material wie die Reaktionsrohre bestehen.

6. Reaktor nach Anspruch 5, wobei das zweite Brückenelement gestufte Durchgänge (49) aufweist, durch die die Reaktionsrohre verlaufen und in die die ersten Brückenelemente in Form einer Passung, insbesondere einer Presspassung, eingefügt sind.

7. Reaktor nach Anspruch 6, wobei das Material des zweiten Brückenelements einen geringeren Wärmeausdehnungskoeffizienten aufweist als das Material der ersten Brückenelemente, wobei bevorzugt das zweite Brückenelement zum größten Teil oder vollständig aus Molybdän, Wolfram, Tantal, Niob und/oder Chrom besteht und/oder die ersten Brückenelemente aus dem Material der Reaktionsrohre bestehen.

8. Reaktor nach einem der vorstehenden Ansprüche, wobei die Brücken als starre Bauteile oder Baugruppen ausgeführt sind, wobei bevorzugt wenigstens eine, bevorzugt jede, der Brücken einteilig, insbesondere als Gussteil, ausgeführt ist.

9. Reaktor nach einem der vorstehenden Ansprüche, wobei sich die eine oder die mehreren Einspeiseöffnungen in einer Reaktorwand befinden, die zwischen den Reaktorwänden, in denen sich die wenigstens eine Rohreintrittsöffnung bzw. die wenigstens eine Rohraustrittsöffnung befindet, verläuft.

10. Reaktor nach Anspruch 9, wobei die eine oder die mehreren Einspeiseöffnungen eine längliche Form parallel zur Längsrichtung der Reaktionsrohre aufweisen.

11. Reaktor nach einem der vorstehenden Ansprüche, wobei die eine oder die mehreren Einspeiseöffnungen von der wenigstens einen Rohreintrittsöffnung und von der wenigstens einen Rohraustrittsöffnung räumlich getrennt sind.

12. Reaktor nach einem der vorstehenden Ansprüche, weiter umfassend eine Wechselstromquelle (50), die den Wechselstrom bereitstellt, wobei für wenigstens eine, bevorzugt für alle, Brücken ein Neutralleiter (N) vorgesehen ist, der die Brücke mit einem Sternpunkt der Wechselstromquelle verbindet; wobei bevorzugt ein elektrischer Widerstand der Brücken zwischen zwei Reaktionsrohren kleiner ist als der elektrische Widerstand des mit der jeweiligen Brücke verbundenen Neutralleiters; wobei weiter bevorzugt ein Verhältnis dieser Widerstände maximal 1/5, mehr bevorzugt maximal 1/20, am meisten bevorzugt maximal 1/50, beträgt.

13. Reaktor nach Anspruch 14, falls abhängig von Anspruch 2, der elektrische Widerstand des Neutralleiters kleiner ist als der Vergleichswiderstand.

14. Reaktor nach einem der vorstehenden Ansprüche, wobei ein Verhältnis der beiden Abstände einer Stromeinspeiseanordnung (18) zu den beiden Brücken (30) im Bereich von 0,25 bis 1 liegt.

15. Verfahren zur Durchführung einer zumindest teilweise bei einer Temperatur von mindestens 500 °C ablaufenden chemischen Reaktion in einem Prozessfluid, wobei ein Reaktor nach einem der vorstehenden Ansprüche verwendet wird, wobei das Prozessfluid durch die Reaktionsrohre des Reaktors geleitet wird und unter Verwendung mehrphasigen Wechselstroms mittels elektrisches Widerstands-Erhitzens erhitzt wird; wobei die chemische Reaktion bevorzugt eine der folgenden Reaktionen ist: Dampfspalten, Dampfreformierung, Trockenreformierung, Propandehydrierung, eine Reaktion mit Kohlenwasserstoffen, die zumindest teilweise bei mehr als 500°C durchgeführt wird.

## Claims

1. A reactor (100) for carrying out a chemical reaction, proceeding at least in part at a temperature of at least 500 °C, in a process fluid using multiphase alternating current, comprising a reactor chamber (10) surrounded by thermally insulating reactor walls (12o, 12u, 12r, 12l), and multiple substantially straight reaction tubes (22);
wherein the reaction tubes run between at least one tube inlet opening (14) and at least one tube outlet opening (15) in opposite reactor walls through the reactor chamber and consist of a material that permits electrical resistance heating;
wherein two electrically conductive bridges (30) spaced apart from one another along the reaction tubes are provided in the reactor chamber, each of which electrically conductively connects the reaction tubes to one another
wherein electrically conductive power input arrangements (18) are provided extending through one or more input openings (16) in one of the reactor walls, each reaction tube being electrically conductively connected to one of the power input arrangements (18), each power input arrangement being electrically conductively connected between the bridges to one of the reaction tubes and being connected or connectable to one of the phases (U, V, W) of the alternating current.

2. The reactor according to claim 1, wherein an electrical resistance of each of the bridges between two reaction tubes is less than an electrical comparator resistance; wherein the comparator resistance is equal to the electrical resistance of one of the reaction tubes over a comparative length; wherein the comparative length is selected from: a distance of the two reaction tubes, and a length of a reaction tube connection between an entry and exit header and a bridge connection at the inlet or outlet of the tube; wherein a ratio of the resistance of the bridge to the comparator resistance is preferably not more than 1/10, more preferably not more than 1/50, most preferably not more than 1/100.

3. The reactor according to any one of the preceding claims, wherein the bridges consist of the same material as the reaction tubes or a material with higher electrical conductivity than the reaction tubes; and/or wherein a cross-sectional area of the bridges lying between two reaction tubes extends parallel to the reaction tubes and is perpendicular to the plane formed by the two reaction tubes, is greater than a cross-sectional area of a wall of the reaction tubes perpendicular to the longitudinal axis of the tube.

4. The reactor according to any one of the preceding claims, wherein the reaction tubes are cast in at least one of the bridges, and/or wherein for at least one of the bridges a reaction tube section is formed integrally with the bridge or an element of the bridge for each reaction tube; wherein preferably further reaction tube sections are connected to the bridge by welding.

5. The reactor according to any one of the preceding claims, wherein at least one bridge (30c) comprises first bridge elements (38), each of which is electrically conductively connected to one of the reaction tubes, and a second bridge element (40) which electrically conductively connects the first bridge elements, wherein the second bridge element consists of a material having a higher electrical conductivity than a material from which the first bridge elements are made, wherein preferably the first bridge elements are made of the same material as the reaction tubes.

6. The reactor according to claim 5, wherein the second bridge element has stepped passages (49) through which the reaction tubes run and into which the first bridge elements are inserted in the form of a fit, in particular a press fit.

7. The reactor according to claim 6, wherein the material of the second bridge element has a lower coefficient of thermal expansion than the material of the first bridge elements, wherein preferably the second bridge element consists predominantly or completely of molybdenum, tungsten, tantalum, niobium and/or chromium and/or the first bridge elements consist of the material of the reaction tubes.

8. The reactor according to any one of the preceding claims, wherein the bridges are designed as rigid components or assemblies, wherein preferably at least one, preferably each, of the bridges is designed in one piece, in particular as a cast part.

9. The reactor according to any one of the preceding claims, wherein the one or more input openings are located in a reactor wall which extends between the reactor walls in which the at least one tube inlet opening or the at least one tube outlet opening is located.

10. The reactor according to claim 9, wherein the one or more input openings have an elongated shape parallel to the longitudinal direction of the reaction tubes.

11. The reactor according to any one of the preceding claims, wherein the one or more input openings are spatially separated from the at least one tube inlet opening and from the at least one tube outlet opening.

12. The reactor according to any one of the preceding claims, further comprising an alternating current source (50) which provides the alternating current, wherein for at least one bridge, preferably for all bridges, a neutral conductor (N) is provided, which connects the bridge to a star point of the alternating current source; wherein, preferably, an electrical resistance of the bridges between two reaction tubes is smaller than the electrical resistance of the neutral conductor connected to the respective bridge; wherein further preferably a ratio of these resistances is at most 1/5, more preferably at most 1/20, most preferably at most 1/50.

13. The reactor according to claim 14, if dependent on claim 2, the electrical resistance of the neutral conductor is less than the comparator resistance.

14. The reactor according to any one of the preceding claims, wherein a ratio of the two distances of a power input arrangement (18) to the two bridges (30) is in the range of 0.25 to 1.

15. A method for carrying out a chemical reaction in a process fluid, which reaction proceeds at least in part at a temperature of at least 500 °C, wherein a reactor according to any one of the preceding claims is used, wherein the process fluid is conducted through the reaction tubes of the reactor and is heated by means of electrical resistance heating using multi-phase alternating current, wherein the chemical reaction is preferably one of the following reactions: steam cracking, steam reforming, dry reforming, propane dehydrogenation, a reaction with hydrocarbons, which is carried out at least in part at more than 500 °C.

## Revendications

1. Réacteur (100) permettant la réalisation d'une réaction chimique, se déroulant au moins partiellement à une température d'au moins 500 °C, dans un fluide de traitement à l'aide d'un courant alternatif polyphasé, comprenant une chambre de réacteur (10) entourée de parois de réacteur (12o, 12u, 12r, 12l) thermiquement isolantes et plusieurs tubes de réaction (22) sensiblement rectilignes ;
dans lequel les tubes de réaction traversent la chambre de réacteur entre au moins une ouverture d'entrée de tube (14) et au moins une ouverture de sortie de tube (15) dans des parois de réacteur opposées l'une à l'autre, et sont constitués d'un matériau qui permet un chauffage par résistance électrique ;
dans lequel deux ponts (30) électriquement conducteurs, espacés l'un de l'autre le long des tubes de réaction, sont prévus dans la chambre de réacteur, lesquels ponts relient respectivement les tubes de réaction entre eux de manière électriquement conductrice ;
dans lequel des agencements d'alimentation en courant (18) électriquement conducteurs sont prévus, lesquels s'étendent à travers une ou plusieurs ouvertures d'alimentation (16), dans l'une des parois de réacteur, dans lequel chaque tube de réaction est relié de manière électriquement conductrice à l'un des agencements d'alimentation en courant (18), dans lequel chaque agencement d'alimentation en courant est relié de manière électriquement conductrice à l'un des tubes de réaction entre les ponts, et est relié ou peut être relié à l'une des phases (U, V, W) du courant alternatif.

2. Réacteur selon la revendication 1, dans lequel une résistance électrique de chacun des ponts entre deux tubes de réaction est inférieure à une résistance électrique de comparaison ; dans lequel la résistance de comparaison est égale à la résistance électrique de l'un des tubes de réaction sur une longueur de comparaison ; dans lequel la longueur de comparaison est choisie parmi : distance entre les deux tubes de réaction, longueur d'une liaison de raccord de tube de réaction entre un collecteur d'entrée respectivement un collecteur de sortie et un raccord de pont à l'entrée respectivement à la sortie du tube ; dans lequel un rapport de la résistance des ponts à la résistance de comparaison est de préférence au maximum de 1/10, plus préférablement au maximum de 1/50, de manière particulièrement préférée au maximum de 1/100.

3. Réacteur selon l'une des revendications précédentes, dans lequel les ponts sont constitués du même matériau que les tubes de réaction ou d'un matériau d'une conductivité électrique supérieure à celle des tubes de réaction ; et/ou dans lequel une surface en section transversale des ponts, laquelle est située entre deux tubes de réaction, s'étend parallèlement aux tubes de réaction et est perpendiculaire au plan formé par les deux tubes de réaction, est supérieure à une surface en section transversale d'une paroi des tubes de réaction, laquelle surface en section transversale est perpendiculaire à l'axe longitudinal des tubes.

4. Réacteur selon l'une des revendications précédentes, dans lequel les tubes de réaction sont coulés dans au moins l'un des ponts ; et/ou dans lequel, pour au moins l'un des ponts pour chaque tube de réaction, une section de tube de réaction est respectivement formée d'un seul tenant avec le pont ou un élément du pont ; dans lequel, de préférence, d'autres sections de tube de réaction sont reliées au pont par soudage.

5. Réacteur selon l'une des revendications précédentes, dans lequel au moins un pont (30c) comprend de premiers éléments de pont (38), dont chacun est relié de manière électriquement conductrice à l'un des tubes de réaction, et un second élément de pont (40) qui relie de manière électriquement conductrice les premiers éléments de pont, dans lequel le second élément de pont est constitué d'un matériau qui présente une conductivité électrique supérieure à celle d'un matériau dont sont constitués les premiers éléments de pont ; dans lequel, de préférence, les premiers éléments de pont sont constitués du même matériau que les tubes de réaction.

6. Réacteur selon la revendication 5, dans lequel le second élément de pont présente des passages (49) étagés à travers lesquels s'étendent les tubes de réaction et dans lesquels les premiers éléments de pont sont insérés sous la forme d'un ajustement, en particulier d'un ajustement serré.

7. Réacteur selon la revendication 6, dans lequel le matériau du second élément de pont présente un coefficient de dilatation thermique inférieur à celui du matériau des premiers éléments de pont, dans lequel, de préférence, le second élément de pont est constitué en grande partie ou entièrement de molybdène, tungstène, tantale, niobium et/ou chrome et/ou les premiers éléments de pont sont constitués du matériau des tubes de réaction.

8. Réacteur selon l'une des revendications précédentes, dans lequel les ponts sont conçus sous la forme de composants ou de modules rigides, dans lequel, de préférence, au moins un, de préférence chacun, des ponts est conçu d'une seule pièce, en particulier sous forme de pièce coulée.

9. Réacteur selon l'une des revendications précédentes, dans lequel l'ouverture ou les ouvertures d'alimentation se trouvent dans une paroi de réacteur qui s'étend entre les parois de réacteur dans lesquelles se trouve l'au moins une ouverture d'entrée de tube respectivement l'au moins une ouverture de sortie de tube.

10. Réacteur selon la revendication 9, dans lequel les une ou plusieurs ouvertures d'alimentation présentent une forme allongée parallèle à la direction longitudinale des tubes de réaction.

11. Réacteur selon l'une des revendications précédentes, dans lequel les une ou plusieurs ouvertures d'alimentation sont spatialement séparées de l'au moins une ouverture d'entrée de tube et de l'au moins une ouverture de sortie de tube.

12. Réacteur selon l'une des revendications précédentes, comprenant en outre une source de courant alternatif (50) qui fournit le courant alternatif, dans lequel, pour au moins un pont, de préférence pour tous les ponts, un conducteur neutre (N) est prévu, lequel relie le pont à un point neutre de la source de courant alternatif ; dans lequel, de préférence, une résistance électrique des ponts entre deux tubes de réaction est inférieure à la résistance électrique du conducteur neutre relié au pont respectif ; dans lequel, plus préférablement, un rapport de ces résistances est au maximum de 1/5, de manière plus préférée au maximum de 1/20, de manière particulièrement préférée au maximum de 1/50.

13. Réacteur selon la revendication 14 lorsqu'elle est dépendante de la revendication 2, la résistance électrique du conducteur neutre est inférieure à la résistance de comparaison.

14. Réacteur selon l'une des revendications précédentes, dans lequel un rapport des deux distances d'un agencement d'alimentation en courant (18) aux deux ponts (30) est situé dans la plage allant de 0,25 à 1.

15. Procédé permettant la réalisation d'une réaction chimique, se déroulant au moins partiellement à une température d'au moins 500 °C, dans un fluide de traitement, dans lequel un réacteur selon l'une des revendications précédentes est utilisé, dans lequel le fluide de traitement est conduit à travers les tubes de réaction du réacteur et est chauffé, à l'aide d'un courant alternatif polyphasé, par chauffage par résistance électrique ; dans lequel la réaction chimique est de préférence l'une des réactions suivantes : vapocraquage, vaporeformage, reformage à sec, déshydrogénation du propane, une réaction avec des hydrocarbures réalisée au moins partiellement à plus de 500 °C.
